Europäisches Patentamt

European Patent Office

Office européen des brevets

(19)

(11) Veröffentlichungsnummer: **0 284 605**
**B1**

(12) **EUROPÄISCHE PATENTSCHRIFT**

(45) Veröffentlichungstag der Patentschrift: **03.10.90**

(51) Int. Cl.⁵: **G 05 B 19/05**

(21) Anmeldenummer: **86904056.8**

(22) Anmeldetag: **07.07.86**

(86) Internationale Anmeldenummer:
**PCT/CH86/00094**

(87) Internationale Veröffentlichungsnummer:
**WO 87/03974 02.07.87 Gazette 87/14**

(54) **SOFTWARE-WERKZEUG ZUR AUTOMATISCHEN ERZEUGUNG EINER FUNKTIONSPLANGRAPHIK.**

(43) Veröffentlichungstag der Anmeldung:
**05.10.88 Patentblatt 88/40**

(45) Bekanntmachung des Hinweises auf die
Patenterteilung:
**03.10.90 Patentblatt 90/40**

(84) Benannte Vertragsstaaten:
**CH DE FR LI SE**

(56) Entgegenhaltungen:
**EP-A-0 200 974**
**US-A-4 326 207**
**US-A-4 445 169**

(73) Patentinhaber: **BBC Brown Boveri AG**
**Haselstrasse**
**CH-5401 Baden (CH)**

(72) Erfinder: **SCHULT, Uwe**
**Schulstr. 27a**
**CH-5417 Untersiggenthal (CH)**

Courier Press, Leamington Spa, England.

EP 0 284 605 B1

## Beschreibung

Technisches Gebiet

Die vorliegende Erfindung betrifft ein Programmiergerät für speicherprogrammierbare Steuerungen mit einem Speicher in dem zur automatischen Erzeugung einer Funktionsplangraphik auf einer graphischen Anzeigevorrichtung aus einem Steuerprogramm ein Software-Werkzeug insbesondere als Firmware gespeichert ist.

Stand der Technik

Unter einem Programmiergerät für eine speicherprogrammierbare Steuerung versteht man in der modernenen Steuer- und Regeltechnik eine kleine, kompakt aufgebaute und daher leicht transportable Datenverarbeitungsanlage, welche über eine genormte Schnittstelle an eine Vielzahl von verschiedenen Steuerungen anschliessbar ist. Im Programmiergerät sind alle Funktionen zusammengefasst, die erforderlich sind, um die Steuerprogramme für die speicherprogrammierbaren Steuerungen zu erstellen und zu warten. Die entsprechenden Funktionen brauchen deshalb bei den Steuerungen selbst nicht vorgesehen zu werden.

Um dem Steuer- und Regeltechniker die Programmierarbeit zur erleichtern, erlauben komfortable Programmiergeräte eine Programmierung direkt auf Funktionsplanebene, d.h. in einer dem Steuer- und Regeltechniker besonders vertrauten Darstellung. Der Funktionsplan der jeweiligen Steuerung wird dazu auf einer graphischen Anzeigevorrichtung des Programmiergeräts dargestellt und der Anwender kann mittels einfacher Kommandos Aenderungen oder Ergänzungen im Funktionsplan vornehmen. Das zum Funktionsplan zugehörige Steuerprogramm wird vom Programmiergerät ohne Zutun des Anwenders selbsttätig erzeugt. Umgekehrt erzeugt das Programmiergerät aus einem bereits vorhandenen maschinenlesbar abgespeicherten Steuerprogramm automatisch den zugehörigen Funktionsplan auf der Anzeigevorrichtung. Innerhalb des Programmiergeräts wird dies von einem Software-Werkzeug ausgeführt, das z.B. als sogenannte Firmware in Programmiergerät implementiert werden kann.

In Programmiergeräten der betrachteten Art werden die Steuerprogramme im allegemeinen modular strukturiert erzeugt. Sie enthalten einzelne Funktionen, die über Funktionsaufrufe aufgerufen werden. Die Funktionsaufrufe wiederum enthalten eine Liste der Eingangs- und Ausgangsparameter der Funktionen. Im Funktionsplan werden die Funktionen durch im allgemeinen rechteckige Funktionsblöcke dargestellt. Deren Ein- und Ausgänge entsprechen im Steuerprogramm den Eingangs- und Ausgangsparametern der Funktionen. Ihre gegenseitige Abhängigkeit wird im Funktionsplan durch Verbindungslinien zum Ausdruck gebracht.

Um die Funktionsplangraphik zu erzeugen, muss das im Programmiergerät enthaltene Software-Werkzeug das Steuerprogramm auf die in ihm enthaltenen Funktionen hin analysieren. Das Steuerprogamm wird in der Regel im Programmiergerät in einem Speicher enthalten sein. Die im Steuerprogamm enthaltenen Funktionen werden von dem Software-Werkzeug anhand ihrer Funktionsaufrufe identifiziert. Mit der gleichen Reihenfolge, mit der die Funktionsaufrufe im Steuerprogamm stehen, und damit mit einer durch das Steuerprogamm vorgegebenen Ordnung, wird in einem gesonderten Speicherbereich durch das Software-Werkzeug eine Liste von Funktionsblöcken angelegt, die zur Darstellung der aufgefundenen Funktionen im Funktionsplan benötigt werden. Neben den Funktionsblöcken selbst werden in die Liste auch deren Eingänge und Ausgänge aufgenommen. Diese entsprechen, wie erläutert, den Eingangs- und Ausgangsparameteren der Funktionen. Die in der Liste enthaltene geordnete Menge von Funktionsblöcken enthält alle Information, die zur Erzeugung der gewünschten Funktionsplangraphik erforderlich ist.

Aus der nicht vorveröffentlichten Schrift EP—A1—200974 (Art. 54(3)) ist ein derartiges Programmiergerät für speicherprogrammierbare Steuerungen mit einem Speicher bekannt. In diesem Speicher ist ein Software-Werkzeug als Firmware gespeichert, welches zur automatischen Erzeugung einer Funktionsplangraphik aus einem Steuerprogamm geeignet ist. Durch Analyse des Steuerprogamms wird in diesem Programmiergerät eine geordnete Menge von Funktionsblöcken gewonnen, die jeweils mindestens einen Eingang und einen Ausgang aufweisen, und die durch das Software-Werkzeug weiter bearbeitet wird. Die Funktionsblöcke werden nach einer vorgegebenen Regel in einer Anzeigevorrichtung angeordnet und durch Verbindungslinien miteinander zu einem Funktionsplan verknüpft. Dieser Funktionsplan weist jedoch eine vergleichsweise geringe Informationsdichte auf, da jeder der Funktionsblöcke lediglich einen Ausgang aufweisen kann.

Ein Programmiergerät mit einem Software-Werkzeug ist Ferner bekannt aus der US—PS 4,445,169. Auch bei dem bekannten Programmiergerät kann der Anwender das Steuerprogamm für die Speicherprogrammierbare Steuerung direkt im Funktionsplan erstellen. Das bekannte Programmiergerät arbeitet jedoch mit einer Funktionsplandarstellung von stark eingeschränkter Allgemeinheit. Die einzelnen Funktionsblöcke weisen lediglich einen einzigen weiterverbundenen Ausgang auf. Sie sind ausschliesslich streng hierarchisch miteinander verknüpft. Im Funktionsplan treten deshalb keine Signalverzweigungen und Signalkreuzungen auf. Wird biespielsweise, was häufig der Fall ist, einunddasselbe Ausgangssignal eines Funktionblocks von zwei anderen Funktionsblöcken als Eingangssignal benötigt, so werden von dem bekannten Programmiergerät zur Vermeidung von Signalverzweigungen im Funktionsplan zwei separate Teilfunktionspläne auf der Anzeigevorrichtung erzeugt. Dies geht sehr zu Lasten der Uebersichtlichkeit und vor allem der Informationsdichte des dargestellten Bildes. Uebersichtlichkeit und Informationsdichte des dargestellten Bildes sind aber entscheidende Faktoren für die Handhabung und den Bedienungskomfort des Programmiergerätes. Da von einer einfachen Handhabung und einem hohen Bedienungskomfort in zunehmendem Masse die Wirtschaftlichkeit der Programmerstellung und Programmwartung und damit überhaupt das rationelle Abwickeln der Automatisierungsaufgaben abhängt, ist die Erzeugung von Funktionsplandarstellungen mit höherer Informationsdichte dringend erwünscht. Auch soll natürlich die Darstellung von Funktionsblöcken mit mehreren weiter verbindbaren Ausgängen im Funktionsplan und entsprechend die Verwendung von Funktionen mit mehreren Ausgangsparametern im Steuerprogamm möglich sein.

Das Problem, dass sich bei der automatischen Erzeugung von komplizierteren Funktionsplänen mit höherer Informationsdichte stellt, ist die dazu benötigte höhere Rechenkapazität. Die in einem kompakten, transportablen Programmiergerät zur Verfügung stehende Rechenkapazität ist aber beschränkt und kann nicht ohne weiteres erweitert werden.

Darstellung der Erfindung

Es ist Aufgabe der vorliegenden Erfindung, ein Programmiergerät mit einem Software-Werkzeug der eingangs genannten Art anzugeben, durch das Funktionspläne der gewünschten Informationsdichte und mit Funktionsblöcken mit mehreren weiter verbindbaren Ausgängen erzeugt werden können.

Die genannte sowie weitere Aufgaben werden gemäss der vorliegenden Erfindung gelöst Angabe eines neuen Programmiergerätes mit einem Software-Werkzeug zur automatischen Erzeugung einer Funktionsplangraphik wie es dem Anspruch zu entnehmen ist.

Kurze Beschreibung der Zeichnungen

Weitere Merkmale und Vorteile der vorliegenden Erfindung ergeben sich aus der nachstehenden ausführlichen Beschreibung insbesondere unter Berücksichtigung der beigefügten Zeichnungen. Es zeigt:

Fig. 1 eine Funktionsplan, der mit einem Software-Werkzeug nach der vorliegenden Erfindung automatisch erzeugbar ist und der eine hohe Informationsdichte sowie Funktionsblöcke mit mehreren weiter verbundenen Ausgängen aufweist,

Fig. 2 in einem schematischen Diagramm einen Rekursionsweg zur Spalteneinordnung des Funktionsblocks $F_1$ von Fig. 1 und

Fig. 3 bis 5 in drei Diagrammen die schrittweise Positionierung von Linienabschnitten des Funktionsplans von Fig. 1 währen seiner Erzeugung.

Bester Weg zur Ausführung der Erfindung

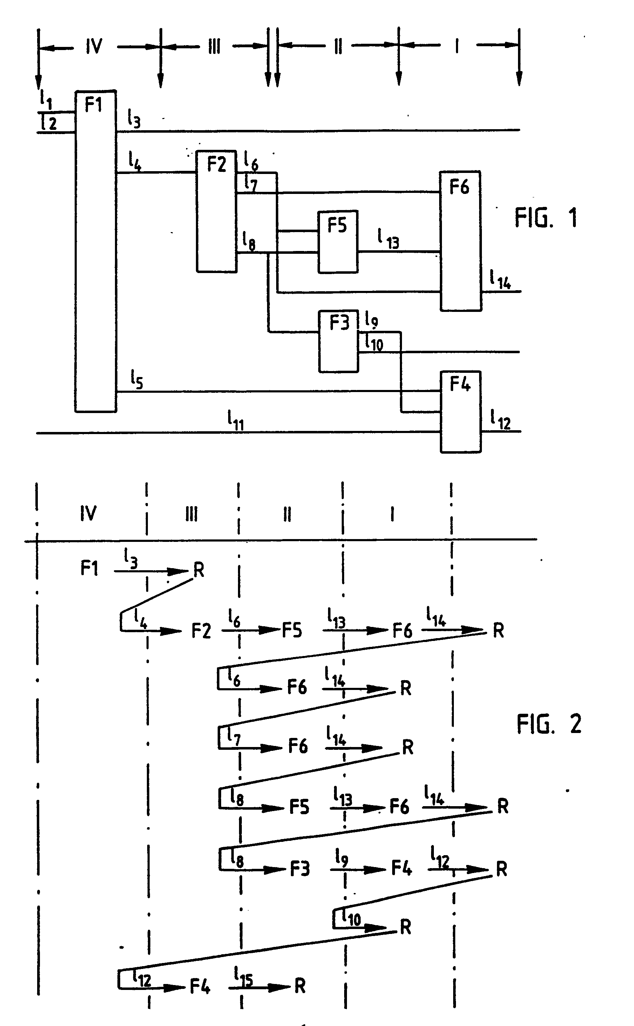

Es wird nunmehr auf die Zeichnung Bezug genommen. Dem Funktionsplan von Fig. 1 liegt die nachfolgende partiell geordnete Menge von Funktionsblöcken zugrunde, von der angenommen werden soll, dass sie in der bereits beschriebenen Weise durch Analyse eines Steuerprogramms für eine speicherprogrammierbare Steuerung gewonnen wurde:

$$F_1 \, (I_1, \, I_2; \, I_3, \, I_4, \, I_5)$$

$$F_2 \, (I_4; \, I_6, \, I_7, \, I_8)$$

$$F_3 \, (I_8; \, I_9, \, I_{10})$$

$$F_4 \, (I_5, \, I_9, \, I_{11}; \, I_{12})$$

$$F_5 \, (I_6, \, I_8; \, I_{13})$$

$$F_6 \, (I_7, \, I_{13}, \, I_6; \, I_{14})$$

In dieser Menge, wie auch in der Zeichnung, bezeichnen die $F_i$ (i = 1 bis 6) die Funktionsblöcke. Die $I_j$ (j = 1 bis 14) bezeichnen einerseits deren Eingänge, soweit sie vor dem Strichpunkt stehen, und andererseits deren Ausgänge, soweit sie nach dem Strichpunkt stehen. In der Zeichnung sind mit den $I_j$ die von den entsprechenden Ausgängen ausgehenden bzw. die zu den entsprechenden Eingängen hinführenden Linien bezeichnet. Soweit Eingänge und Ausgänge mit dem gleichen $I_j$ bezeichnet sind, sind die in der Funktionsplangraphik durch eine mit dem betreffenden $I_j$ bezeichnende Verbindungslinie miteinander verbunden.

Im folgenden wird im einzelnen beschrieben, wie aus der oben stehenden Menge von Funktionsblöcken durch eine Software-Werkzeug nach der vorliegenden Erfindung der in Fig. 1 dargestellte Funktionsplan erzeugt werden kann.

Durch das Software-Werkzeug werden die Funktionsblöcke $F_i$ zunächst gemäss ihrer hierarchischen Ordnung in der partiell geordneten Menge auf Spalten verteilt. In diesen Spalten werden sie mit zunehmender Ordnung von rechts nach links auch auf der graphischen Anzeigevorrichtung im Funktionsplan zur Anzeige gebracht.

Die hierarchische Ordnung der Funktionsblöcke wird durch rekursive Prüfung der Weiterverbindung ihrer Ausgänge auf Eingänge anderer Funktionsblöcke ermittelt. Die hierarchische Ordnung der Funktionsblöcke entspricht der maximalen, bei der rekursiven Weiterverbindungsprüfung erreichten sogenannten rekursiven Tiefe. Man kann den Einordnungsvorgang in die Spalten auch so beschreiben, dass ein Funktionsblock, von dem kein anderer Funktionsblock abhängt, in die äusserst rechte Spalte eingeordnet wird. Ein Funktionsblock, von dem andere Funktionsblöcke abhängen, wird eine Spalte weiter links angeordnet, als der am weitesten links angeordnete, von ihm abhängige Funktionsblock.

In Fig. 2 ist für den Funktionsblock $F_1$ ein möglicher, von seinem ersten Ausgang $I_3$ ausge-

hender Rekursionsweg dargestellt, in dem im übrigen Rekursionswege für alle übrigen Funktionsblöcke miteingeschlossen sind. Der Rekursionsweg ist durch die dargestellten Pfeile gekennzeichnet. Die Pfeile sind mit den "$I_j$" (hier zu verstehen als Bezeichung der Ausgänge der Funktionsblöcke $F_i$) bezeichnet. Ein Pfeil, der zu einem "R" führt soll bedeuten, dass der entsprechende Ausgang nicht mehr auf einen Eingang eines anderen Funktionsblocks weiterverbunden ist, sondern dass die von ihm im Funktionsplan ausgehende Linie zum rechten Rand des Funktionsplans führt. Dies ist z.B. gleich beim ersten Ausgang $I_3$ von $F_1$ der Fall. Der zweite Ausgang $I_4$ von $F_1$ führt zum Funktionsblock $F_2$. Bevor der dritte Ausgang $I_5$ von $F_1$ geprüft wird (in Fig. 2 ganz unten), wird entprechend der rekursiven Methode der Einordnungsvorgang mit dem Funktionsblock $F_2$ fortgesetzt, was zum Funktionsblock $F_5$ usw. führt. Wie aus Fig. 2 zu ersehen ist, ergibt sich im Beispielsfall für den Funktionsblock $F_1$ eine maximale rekursive Tiefe von 3, beispielsweise über folgende Abhängigkeit: von $F_1$ hängt unter anderem $F_2$, von $F_2$ hängt unter anderem $F_5$ und von $F_5$ hängt $F_6$ ab. Von $F_6$ wie auch von $F_4$, hängen keine weiteren Funktionsblöcke ab. Ordnet man letztere in die am weitesten rechte Spalte, z.B. eine Spalte I, ein, so müsste der Funktionsblock $F_1$ um drei Spalten weiter links, demnach in eine Spalte IV, eingeordnet werden. Die Spaltenordnung der übrigen Funktionsblöcke ergibt sich in analoger Weise. Insgesamt resultiert eine Spaltenanordnung gemäss folgender Tabelle:

| IV | III | II | I |
|------|------|------|------|
| $F_1$ | $F_2$ | $F_5$ | $F_6$ |
|  |  | $F_3$ | $F_4$ |

Innerhalb der Spalten wird die Position der Funktionsblöcke durch das Software-Werkzeug durch vertikale Positionierung ihrer Ein- und Ausgänge festgelegt, wobei zunächst die Eingänge und dann die Ausgänge positioniert werden. Bei der Positionierung der Ein- und Ausgänge wird zugleich der Verlauf der zu ihnen hinführenden bzw. der von innnen ausgehenden Verbindungslinien soweit wie möglich festgelegt. Hängt ein Eingang eines Funktionsblocks von einem Ausgang eines anderen Funktionsblocks ab, so werden zunächst alle Eingänge und Ausgänge des anderen Funktionsblocks zusammen mit den ihnen zugehörigen Verbindungslinien bis zum dem genannten Ausgang positioniert. Auch dieser Vorgang ist wieder rekursiv. Die Verbindungslinien werden als waagrechte Linien dargestellt. Lediglich Verbindungslinien zwischen einem Ausgang und einem oder mehreren Eingängen, die auf unterschiedliche Höhe positioniert wurden, enthalten einen senkrechten Abschnitt. In jedem einzelnen solchen Fall wird durch das Software-Werkzeug versucht, durch Strecken eines der Funktionsblöcke in senkrechter Richtung den senkrechten Abschnitt in der Verbindungslinie zu vermeiden.

Das Vorstehende soll nun wieder anhand des gewählten Beispiels im einzelnen erläutert werden. Dazu wird zunächst nochmals auf Fig. 1 Bezug genommen.

Beginnend beispielsweise mit dem Funktionsblock $F_6$ (in der Spalte I) wird durch das Software-Werkzeug zunächst versucht, dessen ersten Eingang $I_7$ zu positionieren. Dieser hängt jedoch vom gleichnamigen Ausgang des Funktionsblocks $F_2$ (in Spalte III) ab. Bevor der Eingang $I_7$ von $F_6$ positioniert werden kann muss daher zunächst der Funktionsblock $F_2$ mit seinen Eingängen und Ausgängen bis einschliesslich des Ausgangs $L_7$ positioniert werden. Die Prüfung des ersten (und einzigen) Eingangs $I_4$ von $F_2$ ergibt, dass auch dieser abhängig ist und zwar vom gleichnamigen Ausgang des Funktionsblocks $F_1$ (in Spalte IV). Auch die Positionierung des ersten Eingangs $I_4$ von $F_2$ muss deshalb zurückgestellt werden bis alle Eingänge und Ausgänge von $F_1$ bis hin zum Ausgang $I_4$ von $F_1$ positioniert sind. Es wird damit zum ersten Eingang $I_1$ von $F_1$ übergegangen. Da der Funktionsblock $F_1$ der am weitesten linken Spalte IV angehört, hängt der Eingang $I_1$, wie sämtliche Eingänge von $F_1$, von keinem anderen Funktionsblock ab. $I_1$ kann daher als erster Eingang tatsächlich positioniert werden.

Zur Positionierung müssen noch folgende Dinge festgelegt sein:
— Form der Funktionsblöcke, insbesondere ihre Breite relativ zur Breite der Spalten,
— Mindestabstand der Verbindungslinien in vertikaler Richtung untereinander und zu den Funktionsblöcken,
— gegebenenfalls Ueberstand der Funktionsblöcke über ihren obersten Eingang bzw. ihren untersten Ausgang,
— gegenseitiger Mindestabstand der Funktionsblöcke,
— Anordnung der Ausgänge der Funktionsblöcke relativ zu ihren Eingängen,
— Anordnung von senkrechten Abschnitten in den Verbindungslinien soweit erforderlich.

Im Funktionsplan von Fig. 1 sind die Funktionsblöcke als Rechtecke mit einheitlicher Breite, jedoch unterschiedlicher Länge dargestellt. Die Breite entspricht 1/3 der Spaltenbreite. Die Funktionsblöcke sind in der Mitte der Spalten angeordnet, die im oberen Teil von Fig. 1 durch die Pfeile angebeutet sind. Die Länge der Funktionsblöcke hängt von der Anzahl sowie der Anordnung ihrer Ein- und Ausänge ab. Für den Mindestabstand der Verbindungslinien untereinader, von diesen zu den Funktionsblöcken sowie für den Ueberstand der Funktionsblöcke über ihren obersten Eingang bzw. untersten Ausgang ist ein Einheitsabstand gewählt. Untereinander angeordnete Funktionsblöcke weisen ebenfalls diesen Einheitsabstand als Mindestabstand auf. Der erste, d.h. oberste Ausgang der Funktionsblöcke ist auf gleicher Höhe wie ihr letzter, d.h. unterster Eingang positioniert. Die seinkrechten Abschnitte in den Verbindungslinien verlaufen entlang den Spaltengrenzen. Zwischen den Spalten II und III zeigt Fig. 1 eine Besonderheit, die noch erläutert wird. Es versteht sich, dass diese Art der Darstellung nur beispielhaft ist. Andere Abstände bzw. Ueberstände könnten genausogut festgelegt sein.

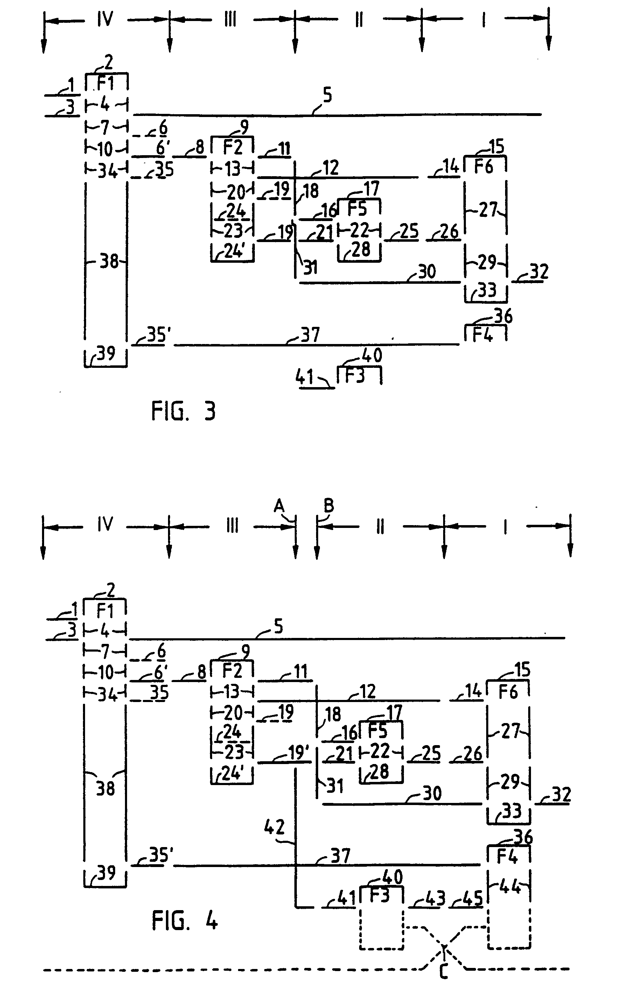

Zurück numehr zum Eingang $I_1$ von $F_1$. Dieser ist erster, d.h. oberster Eingang $F_1$. $I_1$ wird deshalb einen Einheitsabstand tiefer als die Oberkante von $F_1$ positioniert. $F_1$ selbst gehört der Spalte IV an. Aufgrund dieser Positionierung liegt der Eingang $I_1$ von $F_1$, die zu ihm hinführende Linie sowie der "Kopf" des Funktionsblocks $F_1$ bereits fest. Es wird nunmehr auf Fig. 3 Bezug genommen. Fig. 3 zeigt, durch die strichpunktierten Linien gekennzeichnet, die zur Darstellung des als Beispiel gewählten Funktionsplans erforderlichen vier Spalten I bis IV. In Fig. 3 sind die genannten, als erstes positionierten Elemente durch die mit 1 und 2 bezeichneten Linienabschnitte dargestellt. Diese, sowie alle übrigen noch zu besprechenden Linienabschnitte, sind in Fig. 3 zu ihrer Unterscheidbarkeit voneinander etwas gegeneinander abgesetzt dargestellt.

Als nächstes kann der Eingang $I_2$ von $F_1$ positioniert werden und zwar einen Einheitsabstand unter $I_3$. Damit liegen die in Fig. 3 mit 3 und 4 bezeichneten Linienabschnitte fest. $L_2$ ist letzter Eingang von $F_1$. Es kann deshalb jetzt $I_3$ als erster Ausgang von $F_1$ positioniert werden und zwar auf gleicher Höhe wie $I_2$. $I_3$ ist mit keinem weiteren Eingang zu verbinden. Von ihm ausgehend verläuft eine waagrechte Linie, Linie 5 in Fig. 3, durch sämtliche Spalten bis zum rechten Rand der Spalte I.

Nun ist Ausgang $I_4$ von $F_1$ zu positionieren. $I_4$ ist jedoch weiter zu verbinden und zwar auf den gleichnamigen ersten (und einzigen) Eingang von $F_2$. Dieser Eingang ist noch nicht positioniert. Der Ausgang $I_4$ und die von ihm ausgehende Vebindungslinie kann deshalb im Augenblick nur vorläufig und was die Verbindungslinie anbetrifft, nur teilweise positioniert werden. Der Ausgang $I_4$ wird vorläufig einen Einheitsabstand unter dem Ausgang $I_3$ positioniert. Da der Funktionsblock $F_2$ der benachbarten Spalte III angehört, wird die von $I_4$ ausgehende Linie nur bis zur Spaltengrenze zwischen Spalte IV und Spalte III festgelegt, siehe Linienabschnitt 6 in Fig. 3. $F_1$ kann um die Linienabschnitte 7 ergänzt werden. Linienabschnitt 6 ist wegen der Vorläufigkeit seiner Festlegung strichliert dargestellt.

Mit der beschriebenen, wenn auch nur vorläufigen Positionierung des Ausgangs $I_4$ ist die Voraussetzung für die zunächst zurückgestellte Positionierung von $F_2$ geschaffen. Der mit dem gleichnamigen Ausgang von $F_1$ zu verbindende Eingang $I_4$ ist erster bzw. oberster Eingang von $F_2$. $F_2$ muss also einen Einheitsabstand Ueberstand über $I_4$ haben. Durch die vom Ausgang $I_3$ von $F_2$ ausgehende Linie, in Fig. 3 die Linie 5, ist in der Spalte II bereits Platz verbraucht, was nunmehr zu berücksichtigen ist. Die Oberkante von $F_2$ muss von der genannten Linie mindestens einen Einheitsabstand Abstand aufweisen. Für die zum

Eingang $F_4$ von $F_2$ hinführende Linie sowie den Kopf $F_2$ ergeben sich dadurch die in Fig. 3 mit 8 und 9 bezeichneten Linienabschnitte.

Ausgang $I_4$ von $F_1$ könnte nun mit Eingang $I_4$ von $F_2$ verbunden werden. Wie in Fig. 3 zu sehen ist, wurden der genannte Ausgang und der genannte Eingang jedoch auf unterschiedliche Höhe positioniert. Ihre direkte Verbindung hätte einen senkrechten Abschnitt zur Folge. Wie erläutert, war die Positionierung des Ausgangs $I_4$ von $F_1$ jedoch nur vorläfig. Es wird jetzt geprüft, ob durch Streckung von $F_1$ die senkrechte Linie vermieden werden kann. Dies ist hier der Fall, da $F_1$ nach unten hin noch nicht abgeschlossen ist und der unterhalb von $I_4$ liegende Ausgang $I_5$, auf den sich eine solche Streckung auswirken könnte, noch nicht positioniert ist. Aus der Streckung resultieren die Linienabschnitte 6' und 10 in Fig. 3. Linienabschnitt 6' ersetzt Linienabschnitt 6.

Da $I_4$ einziger Eingang von $F_2$ ist, kann sofort dessen erster Ausgang $I_6$ betrachtet werden. $I_6$ ist weiter zu verbinden und zwar auf die gleichnamigen Eingänge von $F_5$ und $F_6$. $I_6$ wird deshalb nur vorläufig positioniert und zwar auf gleicher Höhe wie der erste (und letzte) Eingang von $F_2$. Die von $I_6$ ausgehende Linie kann nur bis zur Spaltengrenze zwischen Spalte III und Spalte II festgelegt werden, da Funktionsblock $F_5$ der Spalte II angehört. Es ergibt sich in Fig. 3 Linienabschnitt 11.

Als nächstes wird zum Ausgang $I_7$ übergegangen. Ueber diesen Ausgang war die Betrachtung zum Funktionsblock $F_2$ gekommen, nämlich über den Versuch, den gleichnamigen Eingang von $F_6$ zu positionieren. Ausgang $L_7$ von $F_2$ ist auf diesen weiter zu verbinden. $L_7$ wird nun, auch wieder nur vorläufig, einen Einheitsabstand unter $I_6$ positioniert. Die von ihm ausgehende Verbindungslinie wird bis zur Spaltengrenze zwischen Spalte I und II festgelegt, weil $F_6$ Spalte I angehört. Es ergeben sich die in Fig. 3 mit 12 und 13 gekennzeichneten Linienabschnitte.

Numehr kann ausgeführt werden, was ganz zu Anfang versucht wurde, nämlich die Positionierung des Eingangs $I_7$ von $F_6$. Dieser wird, zur Vermeidung eines senkrechten Abschnitts in der Verbindunglinie zwischen in ihm und dem gleichnamigen Ausgang von $F_2$, auf gleicher vertikaler Höhe mit letzterem positioniert. Entsprechender Platz ist in Spalte I vorhanden, auch was den oberen Ueberstand des Funktionsblocks 6 über seinen obersten Eingang anbetrifft. Es ergeben sich die Linienabschnitte 14 und 15 in Fig. 3.

Die Positionierung wird mit dem zweiten Eingang $I_{13}$ von $F_6$ forgesetzt. $I_{13}$ hängt von gleichnamigen Ausgang von $F_5$ ab. Also muss erst $F_5$ bis hin zu seinem Ausgang $I_{13}$ positioniert werden. Begonnen wird wiederum mit dem ersten Eingang $I_6$ von $F_5$. Dieser hängt ab von dem gleichnamigen Ausgang von $F_2$. Der Ausgang $I_6$ von $F_2$ wurde aber schon positioniert, vgl. Linienabschnitt 11 in Fig. 3. Dehalb kann direkt die Position von Eingang $I_6$ von $F_5$ festgelegt werden. $F_5$ gehört Spalte II an. Zunächst wird versucht, Eingang $I_6$ von $F_5$ auf gelicher Höhe wie Ausgang $I_6$ von $F_2$ zu positionieren. Aufgrund des in Spalte II bereits verbrauchten Platzes durch die Linienabschnitt 12 entsprechende Verbindungslinie ist dies jedoch nicht möglich. Eingang $I_6$ von $F_5$ muss um zwei Einheitsabstände unterhalb dieser Verbindungslinie positioniert werden. Zwei Einheitsabstände sind deshalb erforderlich, damit auch der Kopft bzw. der obere Ueberstand des Funktionsblocks $F_5$ Platz hat. Es ergeben sich in Fig. 3 die mit 16 und 17 gekennzeichneten Linienabschnitte.

Damit wurde der Ausgang $I_6$ von $F_2$ und der gleichnamige Eingang von $F_5$, die untereinander zu verbinden sind, auf unterschiedlicher Höhe positioniert. Zu prüfen ist deshalb wieder, ob eine dadurch an sich erforderliche senkrechte Verbindungslinie durch Strecken eines der Funktionsblöcke vermieden werden kann. In Frage kommt hier nur der Funktionsblock $F_2$. Seine Streckung ist jedoch nicht möglich, da unterhalb seines Ausgangs $I_6$ sein Ausgang $I_7$ bereits positioniert und auch weiter verbunden wurde. Diese Positionierung und Weiterverbindung bleibt unangetastet. Hier ist also eine senkrechte Verbindungslinie unumgänglich. Es ergibt sich der Linienabschnitt 18 in Fig. 3.

Als nächstes wird Eingang $I_8$ von $F_5$ betrachtet. Dieser hängt ab vom gleichnamigen Ausgang von $F_2$. Ausgang $I_8$ von $F_2$ ist noch nicht positioniert. Vor der Positionierung von $I_8$ müssen sämtliche Eingänge und sämtliche $I_8$ vorgeordneten Ausgänge von $F_2$ positioniert werden. Dies ist im vorliegenden Fall aber schon geschehen. Es kann deshalb $I_8$ direkt positioniert werden. $I_8$ wird vorläufig einen Einheitsabstand unterhalb von $I_7$ positioniert. In Fig. 3 ergibt sich der strichlierte Linienabschnitt 19 sowie die Linienabschnitte 20. $I_8$ ist letzter Ausgang von $F_2$, daher wird $F_2$ (vorläufig) nach unten abgeschlossen durch einen unteren Ueberstand 24.

Mit der Positionierung des Ausgangs $I_8$ von $F_2$ wird $F_2$ wieder verlassen und zum Eingang $I_8$ von $F_5$ zurückgekehrt. Eingang $I_8$ von $F_5$ wird einen Einheitsabstand unterhalb von Eingang $I_6$ positioniert. Es resultieren die Linienabschnitte 21 und 22 in Fig. 3.

Nun muss Eingang $I_8$ von $F_5$ mit dem gleichnamigen Ausgang von $F_2$ verbunden werden. Da beide auf unterschiedlicher Höhe positioniert wurden wäre hier wieder eine senkrechte Verbindungslinie erforderlich. Im vorliegenden Fall lässt sich dies durch Strecken des Funktionsblocks $F_2$ aber wieder vermeiden. Es resultieren die Linienabschnitte 23, 19' und 24' in Fig. 3. Linienabschnitt 19' ersetzt Linienabschnitt 19.

Linienabschnitt 24' ersetzt Linienabschnitt 24. $I_8$ ist letzter Ausgang von $F_2$. Nach der Streckung von $F_2$ ist $I_8$ endgültig positioniert.

Die Positionierung wird mit dem Ausgang $I_{13}$ von $F_5$ fortgesetzt. Er wird auf gleicher Höhe wie der Eingang $I_8$ vorläufig angeordnet, vgl. Linienabschnitt 25 in Fig. 3. Damit ist die Voraussetzung für die zuvor zurückgestellte Positionierung des zweiten Eingangs $I_{13}$ von $F_6$ geschaffen. Dieser wird einfach auf gleicher Höhe wie Ausgang $I_{13}$ von $F_5$ positioniert und kann mit letzterem direkt verbunden werden. In Fig. 3 ergeben sich die Linienabschnitte 26 und 27. Die vorläufige Positionierung des Ausgangs $I_{13}$ von $F_5$ ist damit definitiv geworden. Da $I_{13}$ letzter Ausgang von $F_5$ ist, kann $F_5$ nach unten abgeschlossen werden, was den Linienabschnitt 28 in Fig. 3 ergibt.

Streng nach dem bisher verwandten Schema geht es weiter mit dem dritten Eingang $I_6$ von $F_6$. Dieser hängt ab vom gleichnamigen Ausgang von $F_2$, welcher jedoch bereits festgelegt und unter anderem auf $F_5$ weiter verbunden wurde. Der Eingang $I_6$ von $F_6$ kann deshalb sofort positioniert werden. Dabei ist zu beachten, dass die zu ihm hinführende Verbindungslinie die Spalte II passieren muss und zwar mindestens einen Einheitsabstand unterhalb der Unterkante von $F_5$, da durch dieses der in Spalte II bereits verbrauchte Platz bestimmt wird. Es ergeben sich die in Fig. 3 mit 29 und 30 gekennzeichneten Linienabschnitte. Schliesslich ist noch die Verbindung zum Ausgang $I_6$ von $F_2$ herzustellen. Dies bedingt wieder eine senkrechte Linie. Da unterhalb des Ausgangs $I_6$ von $F_2$ der Ausgang $I_1$ bereits positioniert und weiterverbunden wurde, kommt eine Streckung zur Vermeidung der senkrechten Verbindungslinie nicht mehr in Betracht. Es ergibt sich zusätzlich bzw. als Verlängerung der senkrechten Linienabschnitt 18 in Fig. 3 der senkrechte Linienabschnitt 31 auf der Spaltengrenze zwischen den Spalten II und III.

$I_6$ war letzter Eingang von $F_6$. Es kann daher nunmehr sein erster und einziger Ausgang $I_{14}$ betrachtet werden. Er wird auf gleicher Höhe wie der Eingang $I_6$ positioniert. Da die von $I_{14}$ ausgehende Verbindungslinie zum rechten Rand der Funktionsplangraphik führt, d.h. nicht mehr auf einen weiteren Eingang eines anderen Funktionsblocks, ist die Positionierung von $I_{14}$ definitiv. Aus diesem Grund kann der Funktionsblock $F_6$ auch gleich nach unten abgeschlossen werden. In Fig. 3 resultieren die Linienabschnitte 32 und 33.

Nach der vollständigen Behandlung des Funktionsblocks $F_6$ wird mit dem nächsten Funktionsblock der äusserst rechten Spalte, dem Funktionsblock $F_4$, die Prozedur fortgesetzt.

Der erste Eingang $I_5$ von $F_4$ hängt vom gleichnamigen Ausgang von $F_1$ ab. Dieser muss noch positioniert werden. Er wird vorläufig einen Einheitsabstand unterhalb vom Ausgang $I_4$ positioniert, vgl. in Fig. 3 Linienabschnitt 34 und den strichlierten Linienabschnitt 35.

Nun kann Eingang $I_5$ von $F_4$ positioniert werden. Unter Berücksichtigung des Mindestabstand von zwei Funktionsblöcken untereinander sowie des Ueberstands eines Funktionsblocks über seinen obersten Eingang ergeben sich in Fig. 3 die Linienabschnitte 36 und 37. Linienabschnitt 37 passiert dei beiden Spalten III und II soweit "unten", dass es keine Platzprobleme gibt. Natürlich wäre dies gegebenenfalls zu berücksichtigen gewesen. Durch Strecken des Funktionsblock $F_1$ wird schliesslich wieder eine senkrechte Verbindungslinie vermieden bei dem Versuch Eingang $I_5$ von $F_4$ mit dem gleichnamigen Ausgang von $F_1$ zu verbinden. Es ergeben sich die Linienabschnitte 38 und 35' in Fig. 3. Linienabschnitt 35' ersetzt den strichliert gezeichneten Linienabschnitt 35.

Ausgang $I_5$ ist letzter Ausgang von $F_1$ und ist nunmehr auch definitiv positioniert. Daher kann $F_1$ nach unten abgeschlossen werden, was in Fig. 3 Linienabschnitt 39 ergibt.

Weiter geht es mit dem zweiten Eingang $I_9$ von $F_4$. Dieser hängt ab vom gleichnamigen Eingang von $F_3$. In Bezug auf $F_3$ wurde noch keine Positionierung vorgenommen. Dies muss deshalb zunächst in Angriff genommen werden. Begonnen wird mit dem ersten Eingang $I_8$ von $F_3$. Dieser wiederum hängt ab von dem gleichnamigen Ausgang von $F_2$. Ausang $I_8$ von $F_2$ wurde aber bereits positioniert, so dass Eingang $I_8$ von $F_3$ doch gleich festgelegt werden kann. Unter Berücksichtigung des Mindestabstands eines Funktionsblocks von einer Verbindungslinie sowie dem Ueberstand eines Funktionsblocks über seinen obersten Eingang ergeben sich in Fig. 3 die Linienabschnitte 40 und 41 in Spalte II.

Damit wurde Eingang $I_8$ von $F_3$ tiefer positioniert als der gleichnamige Ausgang von $F_2$. Eine Streckung von Funktionsblock $F_2$ ist hier nicht möglich, da die Positionierung des Ausgangs $I_8$ bereits definitiv ist wegen seiner Weiterverbindung auf den gleichnamigen Eingang von $F_5$. Es ist deshalb zur Verbindung des Eingangs $I_8$ von $F_3$ mit dem Ausgang $I_8$ von $F_2$ eine senkrechte Verbindungslinie erforderlich. Im Hinblick auf diese ergibt sich nun aber das Problem, dass auf der Spaltengrenze zwischen Spalte II und Spalte III in einem Teilabschnitt der genannten festzulegenden senkrechten Verbindungslinie bereits eine senkrechte Verbindungslinie vorgesehen ist, in Fig. 3 Linienabschnitt 31. Zur Vermeidung der gegenseitigen Ueberdeckung der zwei senkrechten Verbindungslinien gibt es grundsätzlich natürlich mehrere Möglichkeiten. Vorzugsweise werden, wie in Fig. 4 dargestellt, die Spalten II und III etwas auseinandergerückt. Es entstehen dadurch zwei Spaltengrenzen A, B auf denen die beiden senkrechten Verbindungslinien parallel zueinander verlaufen können. Auf der Spaltengrenze A ergibt sich in Fig. 4 der neue Linienabschnitt 42. Die zuvor schon festgelegten Linienabschnitte 18 und 31 verlaufen entlang der Spaltengranze B. Sollte es einmal zur Ueberdeckung von drei oder noch mehr senkrechten Linien kommen, so kann in entsprechender Weise durch noch weiteres Auseinanderrücken der benachbarten Splaten Platz für sämtliche senkrechten Linien geschaffen werden.

Im folgenden wird die Erläuterung des Postionierungsvorgangs anhand von Fig. 4 fortgesetzt. Fig. 3 ist insofern unvollendet.

Als nächstes wird der erste Ausgang $I_9$ von $F_3$ betrachtet. Er wird auf gleicher Höhe wie der Eingang $I_8$ positioniert und zwar lediglich vorläufig, weil er auf den gleichnamigen Eingang von $F_4$ weiter zu verbinden ist. Letzterer wird ebenfalls auf gleicher Höhe positioniert. Insgesamt ergeben sich in Fig. 4 die Linienabschnitte 43 bis 45.

Der dritte Eingang $L_{11}$ von $F_4$ hängt von keinem anderen Funktionsblock ab. Das bedeutet, dass die zu ihm hinführende Linie die Spalten IV, III und II passieren muss. In Spalte II ergibt sich ein Problem. Hier müsste die genannte Linie unterhalb des nach unten noch offenen, d.h. noch nicht abgeschlossenen Funktionsblocks $F_3$ entlanggeführt werden. Betrachtet man vorgreiflich erneut den Funktionsblock $F_3$ hinsichtlich seiner noch nicht positionierten Ausgänge, so stellt man fest, dass zwar nur noch ein Ausgang, nämlich Ausgang $L_{10}$ vorhanden ist, dieser aber auf keinen weiteren Funktionsblock weiter zu verbinden ist. Die von ihm ausgehende Linie müsste folglich, aufgrund der bisherigen Positionierung, unterhalb des ebenfalls ja nach unten noch nicht abgeschlossenen Funktionsblocks $F_4$ vorbei zum rechten Rand der Graphik geführt werden. Es ergäbe sich damit eine Situation, wie sie in Fig. 4 unten strichliert dargestellt ist, mit einer Kreuzung von Linien an der mit C markierten Stelle. Eine solche Situation ist nicht erwünscht.

Zur Lösung des entstandenen Problems wird eine Neupositionierung vorgenommen. Betroffen von dieser Neupositionierung sind die Ein- und Ausgänge der Funktionsblöcke zwischen denen das Problem aufgetreten ist, hier die Funktionsblöcke $F_3$ und $F_4$, einschliesslich sämtlicher dabei festgelegter Verbindungslinien. In Fig. 3 und 4 sind dies sämtliche Linienabschnitte ab Abschnitt 36, Linienabschnitt 35' noch mit eingeschlossen.

Bei der Neupositionierung werden die betroffenen Funktionsblöcke in umgekehrter Reihenfolge betrachtet. Wurde ursprünglich vom ersten Eingang $I_5$ von $F_4$ ausgagangen und kam die Betrachtung zu $F_3$ erst über den Versuch, den zweiten Eingang $I_9$ von $F_4$ zu positionieren, so wird jetzt mit $F_3$ begonnen, bevor irgendein Teil von $F_4$ positioniert wird. Diese Methode wird grundsätzlich bei allen auftretenden Problemen bzw. Konflikten der genannten Art angewendet (auch ineinander verschachtelt).

in bezug auf die nunmehr von dem ersten Eingang $I_8$ von $F_3$ ausgehende Positionierung gibt es keine, nicht oben schon bechriebenen Vorgänge oder Probleme, so dass auf die Erläuterung der einzelnen Schritte verzichtet werden kann.

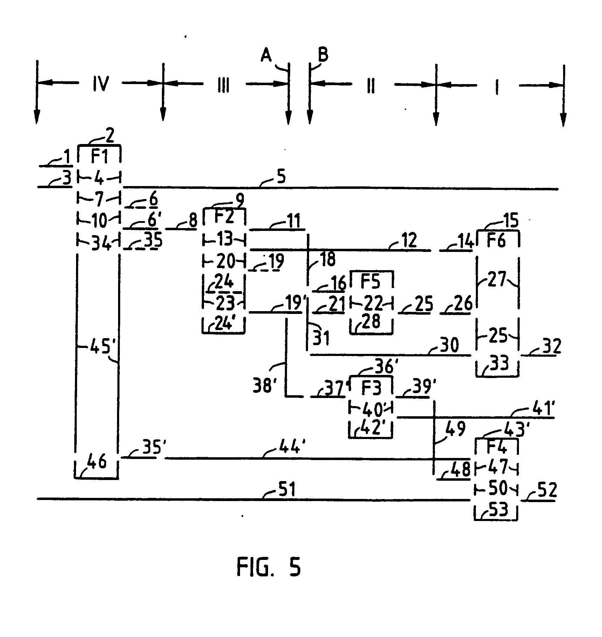

In Fig. 5 sin die neuen, sich aus der Neupositionierung ergebenden Linienabschnitte dargestellt. Es sind dies die Linienabschnitte 36' bis 53, 35' mit eingeschlossen. Soweit sie bereits vor der Neupositionierung positionierte Linienabschnitte ersetzen, sind sie mit einem Beistrich versehen.

Wie aus Fig. 5 zu ersehen ist, konnte durch die Neupositionierung das zuvor entstandene Problem gelöst werden. Mit Linienabschnitt 53 von Fig. 5 sind sämtliche Elemente des Funktionsplans positioniert worden. Fig. 5 entspricht erkennbar Fig. 1.

**Patentanspruch**

Programmiergerät für speicherprogrammierbare Steuerungen mit einem Speicher, in dem zur automatischen Erzeugung einer Funktionsplangraphik auf einer graphischen Anzeigevorrichtung aus einem Steuerprogramm ein Software-Werkzeug insbesondere als Firmware gespeichert ist, in welchem durch Analyse des Steuerprogramms eine geordnete Menge von Funktionsblöcken ($F_1$—$F_6$) gewonnen wird, die jeweils einen oder mehrere Ein- und Ausgänge ($I_1$—$I_{14}$) aufweisen, und die durch das Software-Werkzeug in folgenden Schritten weiter bearbeitet werden:

— diese Funktionsblöcke ($F_1$—$F_6$) werden gemäss ihrer Ordnung von rechts nach links auf Spalten (I—IV) einer in vertikale Spalten aufteilbaren graphischen Anzeigevorrichtung verteilt;

— innerhalb der Spalten (I—IV) werden die Funktionsblöcke entsprechend ihrer Reinhenfolge von oben nach unten positioniert;

— die vertikale Erstreckung der Funktionsblöcke ($F_1$—$F_6$) wird durch Positionierung ihrer Ein- und Ausgänge festgelegt, wobei zunächst die Eingänge und dann die Ausgänge positoniert werden;

— bei der Positionierung der Ein- und Ausgänge wird zugleich der Verlauf von zu ihnen hinführenden bzw. von ihnen ausgehenden Verbindungslinien so weit wie möglich festgelegt;

— die Verbindungslinien werden als waagrechte Linien dargestellt, wobei lediglich Verbindungslinien zwischen einem Ausgang und einem oder mehreren Eingängen, die auf unterschiedliche Höhe positioniert werden, einen zusätzlichen senkrechten Abschnitt enthalten;

— die Funktionsblöcke werden derart in vertikaler Richtung gestreckt, dass senkrechte Abschnitte in Verbindungslinien vermieden werden, sofern dadurch nicht die Positionen von bereits definitiv positionierten Ein- oder Ausgängen betroffen sind;

— falls senkrechte Abschnitte von Verbindungslinien aufeinander fallen sollten, wird die Funktionsplangraphik in horizontaler Richtung derart gespreizt, dass Platz für einen parallelen Verlauf der senkrechten Abschnitte entsteht;

— wenn ein Eingang eines Funktionsblocks von einem Ausgang eines anderen Funktionsblocks abhängt, so werden zunächst alle Ein- und Ausgänge dieses anderen Funktionsblocks positioniert;

— bei Auftreten eines Konfliktes zwischen einem Ausgang eines ersten Funktionsblocks und einem Eingang eines zweiten Funktionsblocks, bei welchem die von dem Ausgang ausgehende Linie oder die zu dem Eingang hinfürende Linie, obwohl nicht Verbindungslinie zwischen einem Ausgang und einem oder mehreren Eingängen, nicht lediglich waagrecht darstellbar ist, wird eine Neupositionierung sämtlicher Ein- und Ausgänge vorgenommen, wobei die genannten Funktionsblöcke im weiteren in umgekehrter Reihenfolge positioniert werden.

**Revendication**

Appareil de programmation pour des commandes à programme enregistré comprenant une mémoire dans laquelle, en vue de la production automatique d'un schéma fonctionnel en représentation graphique sur un dispositif d'affichage graphique, à partir d'un programme de commande, un outil logoiciel est stocké, en particulier sous forme de microprogramme, dans lequel, par analyse du programme de commande, est obtenue une quantité classée de blocs fonctionnels ($F_1$ à $F_6$) qui présentent chaque fois une ou plusieurs entrées et sorties ($I_1$ à $I_{14}$) et qui sont traités ultérieurement par l'outil logiciel par l'exécution des pas suivants:

— ce blocs fonctionnels ($F_1$ à $F_6$) sont répartis dans l'ordre de leur classification de la droite vers la gauche en colonnes (I à IV) d'un dispositif d'affichage graphique pouvant être divisé en colonnes verticales;

— à l'intérieur des colonnes (I à IV), les blocs fonctionnels sont positionés selon leur ordre de succession du haut vers le bas;

— l'étendue verticale des blocs fonctionnels ($F_1$ à $F_6$) est établie par le postionnement de leurs entrées et sorties, les entrées étant positionnées d'abord et les sorties, ensuite;

— lors du positionnement des entrées et sorties, l'allure des lignes de liaison qui y mènent ou qui en partent est en même temps étabile dans toute la mesure du possible;

— les lignes de liaison sont représentées sous forme de lignes horizontales et seules les lignes de liaison entre une sortie et une ou plusieurs entrées qui sont positionnées à des hauteurs différentes contiennent une section verticale supplémentaire;

— les blocs fonctionnels sont allongés dans les sens vertical dans une mesure permettant d'éviter les sections verticales dans les lignes de liaison, pour autant que cela n'exerce aucun effet sur le positionnement d'entrées ou de sorties déjà positionnées définitivement;

— au cas où des sections verticales de lignes de liaison coïncideraient, le schéma fonctionnel en représentation graphique est étalé dans le sens horizontal pour offrir une place suffisante pour que les sections verticales puissent s'étendre parallèlement l'une à l'autre;

— lorsqu'une entrée d'un bloc fonctionnel dépend d'une sortie d'un autre bloc fonctionnel, toutes les entrées et sorties de cet autre bloc fonctionnel sont d'abord positionées;

— lors de l'apparition d'un conflit entre une sortie d'un premeir bloc fonctionnel et une entrée d'un deuxième bloc fonctionnel, pour lequel la ligne partant de la sortie ou la ligne menant à l'entrée, bien qu'il ne s'agisse pas d'une ligne de liaison entre une sortie et une ou plusieurs entrées, ne peut pas être représentée comme étant uniquement horizontale, on procède à un nouveau positionnement de l'ensemble des entrées et sorties en positionnant par la suite les blocs fonctionnels cités dans l'ordre de succession inverse.

## Claim

Programming device for stored-program control systems comprising a memory, in which a software tool for automatically generating a graphic function diagram on a graphic display device from a control program is stored, in particular as firmware, in which tool, by analysis of the control program, an ordered set of function blocks ($F_1$—$F_6$) is obtained which in each case exhibit one or more inputs and outputs ($I_1$—$I_{14}$) and which are further processed by the software tool in the following steps:

— these function blocks ($F_1$—$F_6$) are distributed in accordance with their order from right to left to columns (I—IV) of a graphic display device which can be divided into vertical columns;

— within the columns (I—IV), the function blocks are positioned in accordance with their sequence from top to bottom;

— the vertical extent of the function blocks ($F_1$—$F_6$) is determined by positioning their inputs and outputs, first the inputs and then the outputs being positioned;

— during the positioning of the inputs and outputs, the course of connecting lines leading to them or coming from them is, at the same time, defined as far as possible;

— the connecting lines are represented as horizontal lines, in which arrangement only connecting lines between an output and one or more inputs which are positioned at different levels contain an additional vertical section;

— the function blocks are stretched in the vertical direction in such a manner that vertical sections are avoided in connecting lines if this does not affect the positions of already definitely positioned inputs or outputs;

— if vertical sections of connecting lines should coincide with one another, the graphic function diagram is spread in the horizontal direction in such a manner that space is created for a parallel course of the vertical sections;

— if an input of a function block depends on an output of another function block, first all inputs and outputs of this other fonction block are positioned;

— if a conflict occurs between an output of a first function block and an input of a second function block in which the line coming from the output or the line leading to the input, although not a connecting line between an output and one or more inputs, cannot be represented only horizontally, a repositioning of all inputs and outputs is effected, the said function blocks thereafter being positioned in reverse sequence.

FIG. 1

FIG. 2

FIG. 3

FIG. 4

FIG. 5